# EUROPÄISCHE PATENTSCHRIFT

(11) **EP 1 974 964 B1**
(45) Veröffentlichungstag und Bekanntmachung des Hinweises auf die Patenterteilung: **27.04.2011**
(21) Anmeldenummer: 08005747.4
(22) Anmeldetag: 27.03.2008
(51) Int. Cl.: B60D 1/52, B60D 1/54

(54) **Anhängekupplung mit Mitnahmehalterung**
Tow bar with in-tow bracket
Remorque dotée d'une fixation d'entraînement

(30) Priorität: 28.03.2007 DE 102007014818
(43) Veröffentlichungstag der Anmeldung: 01.10.2008
(73) Patentinhaber: WESTFALIA - Automotive GmbH, 33378 Rheda-Wiedenbrück (DE)
(72) Erfinder: Waldau, Jens, 33378 Rheda-Wiedenbrück (DE)
(74) Vertreter: Bregenzer, Michael

(56) Entgegenhaltungen:
- DE-A1- 3 328 524
- DE-A1- 3 828 771
- DE-U1-202006 009 230
- FR-A- 2 310 233
- FR-A- 2 352 679
- FR-A- 2 405 149
- US-A- 5 476 279

## Beschreibung

Die Erfindung betrifft eine Anhängekupplung mit einem an einem Zugfahrzeug befestigten oder befestigbaren Zugbetriebshalter, einem an dem Zugbetriebshalter mit einer Verriegelungseinrichtung zumindest in einer zum ziehen eines Anhängers vorgesehenen Arbeitsstellung verriegelbaren, einen Kugelkopf aufweisenden Kupplungsarm, der bei Nichtgebrauch in einer Freigabestellung der Verriegelungseinrichtung von dem Zugbetriebshalter entfernbar ist gemäß dem oberbegriff des Anspruchs 1.

Eine derartige Anhängekupplung geht aus US 5,476,279 hervor.

DE 20 2006 009 230 U1 betrifft eine Anhängekupplung, deren Kupplungsarm in einer Linearführung verschieblich und drehbar zwischen einer Gebrauchsstellung und einer Nichtgebrauchsstellung gelagert ist.

Der Zugbetriebshalter umfasst beispielsweise eine Aufnahmehülse, die an einem Querträger einer Trägeranordnung befestigt ist. Die Verriegelungseinrichtung ist zweckmäßigerweise ein Bestandteil des Kupplungsarms und enthält beispielsweise Formschlusskörper, die in korrespondierende Formschlussaufnahmen des Zugbetriebshalters in der Arbeitsstellung eingreifen. Wenn der Kupplungsarm nicht mehr benötigt wird, löst man die Verriegelungseinrichtung und kann den Kupplungsarm von dem Zugbetriebshalter entfernen. Der Kupplungsarm kann dann beispielsweise entfernt vom Zugfahrzeug abgelegt oder im Innenraum, z.B. dem Gepäckraum, des Zugfahrzeugs verstaut werden.

Nachteilig beim Stand der Technik ist allerdings, dass der Kupplungsarm im Zugfahrzeug Platz beansprucht. Auch bei Fahrzeugen, die nicht mit Anhängekupplungen ausgerüstet werden, ist ein entsprechender Stauraum vorzuhalten.

Es ist daher die Aufgabe der vorliegenden Erfindung, eine platzsparende Unterbringungsart für einen Kupplungsarm einer Anhängekupplung der eingangs genannten Art bei bequemer Handhabung bereitzustellen.

Zur Lösung der Aufgabe ist eine Anhängekupplung gemäß der technischen Lehre des Anspruchs 1 vorgesehen.

Ein Grundgedanke der Erfindung ist, den Kupplungsarm bei Gebrauch und auch bei Nichtgebrauch im Außenbereich des Zugfahrzeuges anzuordnen, sodass im Innenraum des Zugfahrzeugs, beispielsweise eines Personenkraftwagens oder eines Transporters, kein Stauraum erforderlich ist. Der Kupplungsarm ist in der Nichtgebrauchsstellung beispielsweise hinter einem Stoßfänger des Zugfahrzeugs und/oder an einer Unterseite des Zugfahrzeugs angeordnet.

Die Mitnahmehalterung ist zweckmäßigerweise zumindest teilweise in einem Hohlraum angeordnet, der ohnehin im Heckbereich des Fahrzeugs vorhanden ist, beispielsweise zwischen einem Stoßfänger des Zugfahrzeugs und der Fahrzeugkarosserie. Der Kupplungsarm ist dadurch auch bei Nichtgebrauch vor Umwelteinflüssen geschützt und insbesondere gegen Sicht abgedeckt, sodass er optisch nicht stört.

Zweckmäßigerweise ist der Kupplungsarm in der Nichtgebrauchsstellung weiter von einer Fahrbahnoberfläche entfernt als in der Arbeitsstellung. Dadurch wird die Bodenfreiheit des Zugfahrzeugs bei Nichtgebrauch des Kupplungsarms nicht beeinträchtigt. Die weiter oben liegende Stellung des Kupplungsarms ist beispielsweise dadurch erreichbar, dass die Mitnahmehalterung relativ zu dem Zugbetriebshalter weiter oben angeordnet ist und/oder der Kupplungsarm in seiner Nicht-gebrauchsstellung eine Schräglage einnimmt.

Der Kupplungsarm kann in seiner Nichtgebrauchsstellung zu einer vertikalen Fahrzeughochachse des Zugfahrzeuges schräg stehen, insbesondere im Bereich eines Halteabschnittes, der in der Arbeitsstellung in den Zugbetriebshalter eingreift.

Zur platzsparenden Unterbringung kann auch beitragen, wenn der Kupplungsarm in seiner Nichtgebrauchsstellung quer zur Fahrzeuglängsachse steht, beispielsweise rechtwinkelig oder schräg zur rechtwinkeligen Lage.

Auch eine liegende Stellung des Kupplungsarms, bei der beispielsweise ein Halteabschnitt des Kupplungsarms und seine Kupplungskugel etwa in derselben Horizontalebene liegen, ist möglich.

Der Halteabschnitt des Kupplungsarms kann in der Nichtgebrauchsstellung bezüglich der Horizontalen auch unterhalb der Kupplungskugel liegen.

Der Zugbetriebshalter und/oder die Mitnahmehalterung weisen vorzugsweise eine Steckaufnahme zum Einstecken eines Steckendes des Kupplungsarms auf.

Zwar ist es bevorzugt, dass die Mitnahmehalterung und der Zugbetriebshalter zwei voneinander separate Bauelemente sind. Es ist aber auch möglich, dass der Zugbetriebshalter die Funktion der Mitnahmehalterung erfüllt.

Prinzipiell wäre es dabei möglich, dass der Zugbetriebshalter zur Aufnahme des Kupplungsarms in der Nichtgebrauchsstellung und in der Arbeitsstellung jeweils separate Aufnahmen, insbesondere Steckaufnahmen, aufweist. Bevorzugt ist jedoch, wenn ein und dieselbe Steckaufnahme den Kupplungsarm sowohl in der Arbeitsstellung als auch in der Nichtgebrauchsstellung aufnimmt, wobei der Kupplungsarm in diesen beiden Positionen unterschiedliche Stellungen einnimmt. Vorzugsweise steht der Kupplungsarm in der Arbeitsstellung im wesentlichen parallel zur Fahrzeuglängsachse nach hinten vor das Heck des Fahrzeugs vor, während er in der Nichtgebrauchsstellung schräg oder quer zur Fahrzeuglängsachse steht. Wie oben erläutert, ist eine Position quer zur Fahrzeuglängsrichtung, d.h. in Fahrzeugquerrichtung, vorteilhaft. Die Steckaufnahme verläuft vorzugsweise im montierten Zustand der Anhängekupplung vertikal oder vertikal schräg.

Der Zugbetriebshalter hat zweckmäßigerweise für die Arbeitsstellung und die Nichtgebrauchsstellung erste und zweite Verriegelungsmittel, beispielsweise erste und zweite Formschlusskonturen, so dass der Kupplungsarm am Zugbetriebshalter in beiden Stellungen verriegelbar ist. Dabei ist es beispielsweise möglich, dass die Verriegelungsmittel, z.B. Formschlusskonturen, für die Arbeitsstellung im montierten Zustand der Anhängekupplung näher bei der Fahrbahnoberfläche sind, während die Formschlusskonturen oder Verriegelungsmittel für die Nichtgebrauchsstellung von der Fahrbahnoberfläche weiter entfernt sind. Beispielsweise können der Nichtgebrauchsstellung zugeordnete Formschlussaufnahmen insbesondere an einem Randbereich der Steckaufnahme, z.B. Keilschrägen, tiefer in die Steckaufnahme hineinragen als der Arbeitsstellung zugeordnete Formschlussaufnahmen.

Prinzipiell ist es möglich, dass die Mitnahmehalterung unmittelbar an einem Bauteil des Zugfahrzeugs, beispielsweise an seiner Karosserie, befestigt wird, z.B. durch eine Steck-, Klebe-, Schraub-, Schweißverbindung oder dergleichen.

Vorteilhaft ist es aber, wenn der Zugbetriebshalter und die Mitnahmehalterung gemeinsam an einer Trägeranordnung der Anhängekupplung befestigt sind. Die Mitnahmehalterung und der Zugbetriebshalter sind vorteilhaft gemeinsam an einem Querträger der Trägeranordnung befestigt, der sich zwischen Seitenträgern erstreckt. Die Mitnahmehalterung und der Zugbetriebshalter sind mit Abstand zueinander an der Trägeranordnung angeordnet, wobei Abstände bezüglich der Fahrzeuglängsachse und/oder der Fahrzeugquerachse möglich sind.

In der Nichtgebrauchsstellung befindet sich der Kupplungsarm zweckmäßigerweise in einem Ruheraum zwischen der Trägeranordnung und dem Stoßfänger oder zwischen der Trägeranordnung und einer Karosserie des Zugfahrzeugs. Der Ruheraum ist beispielsweise zwischen dem Querträger und der Karosserie oder dem Querträger und dem Stoßfänger vorgesehen. In diesem Zusammenhang sei betont, dass die Mitnahmehalterung auch an einem sonstigen Bestandteil der Trägeranordnung, beispielsweise an einem der Seitenträger, angeordnet sein kann. Ferner ist es möglich, dass an dem Querträger beispielsweise eine Aussparung oder Ausnehmung für die Mitnahmehalterung vorgesehen ist. Der Querträger kann als Mitnahmehalterung ausgebildet sein.

Die Mitnahmehalterung weist zweckmäßigerweise Verriegelungsmittel auf, die mit Komponenten der Verriegelungseinrichtung am Kupplungsarm zusammenwirken. Die Verriegelungsmittel wirken vorteilhaft ähnlich wie Verriegelungsmittel am Zugbetriebshalter. Beispielsweise umfassen die Verriegelungsmittel Formschlusskonturen, die mit Formschlusskonturen des Kupplungsarms zusammenwirken, beispielsweise Kugelsitzrinnen, Vorsprünge, Ausnehmungen, insbesondere an einer Einführseite, wo der Kupplungsarm in die Mitnahmehalterung eingeführt wird, oder dergleichen. Die Verriegelungseinrichtung am Kupplungsarm umfasst zum Beispiel bewegliche verriegelungskörper, zum Beispiel Walzen, Kugeln oder dergleichen, und/oder feststehende Ausnehmungen oder Vorsprünge am Kupplungsarm.

Die verriegelungsmittel der Mitnahmehalterung können mechanisch weniger belastbar und/oder geometrisch einfacher ausgestaltet sein als Verriegelungsmittel des Zugbetriebshalters, der im Anhängebetrieb höhere Belastungen aushalten muss.

Der Zugbetriebshalter umfasst beispielsweise eine Zugbetriebs-Aufnahmehülse oder ein Aufnahmerohr. Die Mitnahmehalterung umfasst zweckmäßigerweise ebenfalls eine Aufnahmehülse, nämlich eine Mitnahme-Aufnahmehülse in der Art der Zugbetriebsaufnahmehülse.

Wie oben bereits erläutert, bildet beispielsweise der Stoßfänger des Zugfahrzeugs einen Schutz für den Kupplungsarm bei Nichtgebrauch. Vorteilhaft ist es aber, wenn die Mitnahmehalterung einen Schutzbehälter, beispielsweise eine Schutzhaube oder ein insgesamt geschlossenes Schutzbehältnis, für den Kupplungsarm umfasst oder bildet. Der Schutzbehälter ist beispielsweise aus Kunststoff. Der Schutzbehälter kann unten, oben oder seitlich offen sein. Ferner ist es möglich, den Schutzbehälter beispielsweise mit einem Deckel zu verschließen.

Die Mitnahmehalterung umfasst zweckmäßigerweise Rastmittel, mit denen der Kupplungsarm an der Mitnahmehalterung verrastet werden kann. Dadurch ist die Anbringung des Kupplungsarms an der Mitnahmehalterung oder auch das Entfernen vereinfacht. Die Rastmittel sind beispielsweise an einem Gehäuse der Mitnahmehalterung, zum Beispiel dem vorgenannten Schutzbehälter, angeordnet. Das Gehäuse ist im Bereich der Rastmittel vorzugsweise federelastisch, beispielsweise weil es aus Kunststoff, einem geeignet dünnen Metall oder einem sonstigen biegeelastischen Material besteht.

Die Mitnahmehalterung enthält zweckmäßigerweise eine Kugelkopf-Aufnahme für den Kugelkopf. Diese Kugelkopf-Aufnahme kann beispielsweise rastend ausgestaltet sein, sodass der Kugelkopf in der Kugelkopf-Aufnahme verrastbar ist.

Vorteilhaft ist die Mitnahmehalterung als eine universelle Mitnahmehalterung ausgestaltet, an der Kupplungsarme mit unterschiedlichen Geometrien anordenbar sind. Dadurch wird die Fertigung vereinfacht. Die Mitnahmehalterung enthält zweckmäßigerweise zu diesem Zweck eine Halteanordnung zum Halten von Kupplungsarmen mit unterschiedlichen Geometrien. Die Halteanordnung enthält beispielsweise nebeneinander angeordnete Halteaufnahmen, Rastvorsprünge oder dergleichen. Die Halteanordnung kann beispielsweise mit der vorgenannten Kugelkopf-Aufnahme für den Kugelkopf zusammenwirken, wobei man sich hier zunutze macht, dass Kugelköpfe ein Normmaß aufweisen und die Kugelkopf-Aufnahme sozusagen immer passt.

Die Halteanordnung umfasst vorteilhaft mindestens einen langgestreckten Haltevorsprung oder eine langgestreckte Halteaufnahme. Die langgestreckten Komponenten umfassen beispielsweise Halteschienen, Halteschultern oder dergleichen.

Zweckmäßigerweise ist die Mitnahmehalterung feststehend an der Karosserie und/oder der vorgenannten Trägeranordnung angeordnet. Dadurch sind sehr einfache Bauweisen der Mitnahmehalterung möglich.

Ein vorteilhaftes Bedienkonzept sieht vor, dass die Mitnahmehalterung zwischen einer Entnahmeposition, in der der Kupplungsarm aus der Mitnahmehalterung entnommen werden kann, und einer für den Fahrbetrieb vorgesehenen Fahrposition beweglich gelagert ist. Beispielsweise ist eine Linearverstellung und/oder ein Schwenken möglich. Dazu ist beispielsweise eine Linearführung oder ein Schwenklager vorhanden. Die Mitnahmehalterung ist in der Entnahmeposition nach unten oder zumindest teilweise vor das Zugfahrzeug verlagert. Somit steht beispielsweise der Kupplungsarm in der Entnahmeposition nach unten oder nach hinten vor das Zugfahrzeug vor, sodass er bequem ergriffen werden kann. Auch das Anbringen des Kupplungsarms in die Mitnahmehalterung ist in deren Entnahmeposition vereinfacht.

Es ist denkbar, dass der Kupplungsarm die Mitnahmehalterung in der Fahrposition hält. Dazu können beispielsweise Verriegelungsmittel der Verriegelungseinrichtung des Kupplungsarms in korrespondierende, ortsfeste Verriegelungskonturen eingreifen, die z.B. an der Trägeranordnung oder der Karosserie vorgesehen sind.

Zweckmäßig ist es, wenn die Anhängekupplung eine Halteeinrichtung zum Halten der Mitnahmehalterung in der Fahrposition aufweist, wobei die Halteeinrichtung zugleich den Kupplungsarm in der Mitnahmehalterung und die Mitnahmehalterung in ihrer Fahrposition hält. Die Halteeinrichtung enthält beispielsweise einen Schwenkbügel. Eine Längsverstellachse oder eine Schwenkachse der Mitnahmehalterung und eine Schwenkachse des Schwenkbügels sind zweckmäßigerweise zueinander winkelig, beispielsweise rechtwinkelig. Ein vorderer Endbereich des Schwenkbügels untergreift in der Haltestellung den Kupplungsarm oder umgreift den Kupplungsarm vorteilhaft gabelartig.

Die Halteeinrichtung enthält zweckmäßigerweise eine Rasteinrichtung für eine Rastverbindung mit der Mitnahmehalterung und/oder dem Kupplungsarm. Durch die Rastverbindung ist eine sichere, zugleich aber leicht lösbare Verbindung möglich.

Beispielsweise ist ein vorderes Ende der Halteeinrichtung als ein Federende ausgestaltet, das in der Haltestellung unter Federspannung an der Mitnahmehalterung und/oder dem Kupplungsarm anliegt.

Vorteilhaft ist an der Mitnahmehalterung eine Halterung für eine Steckdose zur elektrischen Stromversorgung des Anhängers angeordnet oder die Mitnahmehalterung bildet eine Steckdosen-Halterung.

Bei der vorgenannten Variante der in eine Entnahmeposition schwenkbaren Mitnahmehalterung kann es vorteilhaft sein, wenn die Entnahmeposition zugleich die Arbeitsstellung für die Steckdose ist. Beispielsweise ist die Mitnahmehalterung in der Entnahmeposition so weit nach unten und/oder in Richtung vor das Zugfahrzeug geschwenkt, dass die Steckdose zugänglich ist. Die Steckdose steht beispielsweise nach unten und/oder vorn vor den Stoßfänger des Zugfahrzeuges vor.

Nachfolgend werden Ausführungsbeispiele der Erfindung anhand der Zeichnung erläutert. Es zeigen:
- Figur 1: eine perspektivische Ansicht einer Anhängekupplung mit einer Mitnahmehalterung, die ein Schutzgehäuse für einen Kupplungsarm aufweist,
- Figur 2: die Anhängekupplung schräg von unten,
- Figur 3: eine Schnittdarstellung der Anhängekupplung gemäß Figur 1 etwa entlang einer Schnittlinie A-A,
- Figur 4: eine Querschnittsansicht der Anhängekupplung gemäß Figur 1 entlang einer Schnittlinie B-B in Figur 3,
- Figur 5: eine Querschnittsansicht entsprechend etwa Figur 4, wobei ein Kupplungsarm mit einem längeren Kupplungshals an der Mitnahmehalterung angeordnet ist,
- Figur 6: eine Querschnittsdarstellung entsprechend etwa Figur 4, wobei ein Kupplungsarm mit einem kürzeren Kupplungshals an der Mitnahmehalterung befestigt ist,

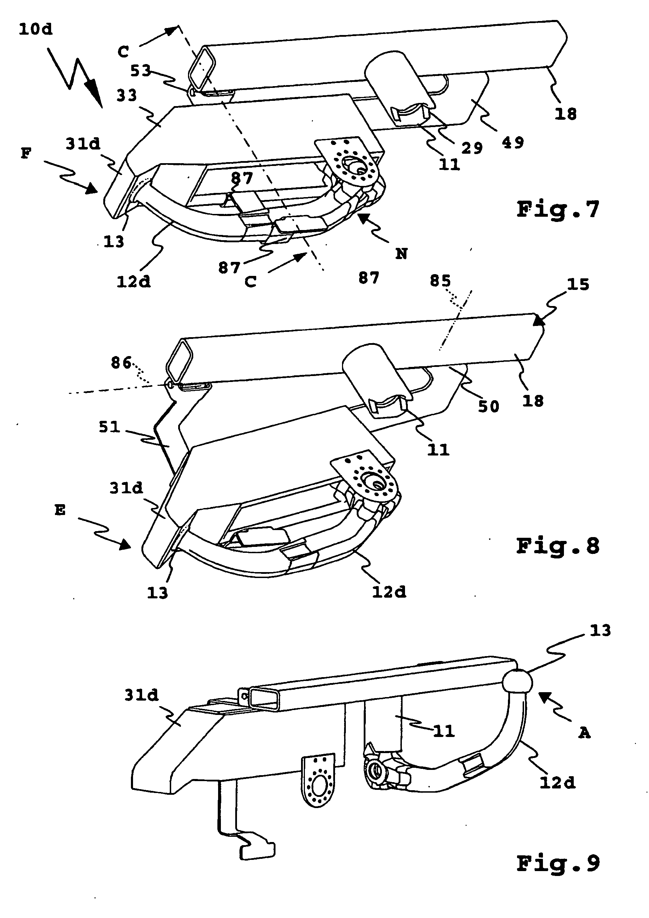

- Figur 7: eine Anhängekupplung mit einer schwenkbaren Mitnahmehalterung in Fahrposition, bei der der Kupplungsarm in der Nichtgebrauchsstellung in der Mitnahmehalterung angeordnet ist,
- Figur 8: die Anhängekupplung gemäß Figur 7 mit nach unten geschwenkter Mitnahmehalterung,
- Figur 9: die Anhängekupplung gemäß Figur 7 mit einem Kupplungsarm in Arbeitsstellung,
- Figur 10: eine Querschnittsansicht entsprechend einer Linie C-C in Figur 7,
- Figur 11: die Querschnittsansicht ähnlich Figur 10, wobei eine Halteeinrichtung für den Kupplungsarm gelöst ist,
- Figur 12: eine hintere Ansicht der Anhängekupplung gemäß Figur 7 mit einer zusätzlich eingezeichneten alternativen Anbringungsart der Mitnahmehalterung,
- Figur 13: eine Anhängekupplung mit einer Mitnahme-Aufnahmehülse, die seitlich oberhalb einer FahrbetriebsAufnahmehülse angeordnet ist, in perspektivischer Schrägansicht von hinten,
- Figur 14-: eine teilweise geschnittene hintere Teilansicht der Anhängekupplung gemäß Figur 13,
- Figur 15: die Anhängekupplung gemäß Figur 13, wobei der Kupplungsarm aus der Mitnahme-Aufnahmehülse entfernt ist,
- Figur 16: eine Anhängekupplung mit einer Mitnahme-Aufnahmehülse, die nahe bei der Fahrbetriebs-Aufnahmehülse angeordnet ist, in perspektivischer Ansicht vom zugfahrzeug her gesehen,
- Figur 17: eine Seitenansicht der Anhängekupplung gemäß Figur 16,
- Figur 18: eine Anhängekupplung mit einer Mitnahme-Aufnahmehülse, in der ein Kupplungsarm eine Schrägposition bezüglich einer Fahrzeugquerachse einnimmt, in perspektivischer Ansicht,
- Figur 19: eine Seitenansicht der Anhängekupplung gemäß Figur 18,
- Figur 20: eine Anhängekupplung mit einer an einem Querträger schräg angeordneten Mitnahme-Aufnahmehülse, sodass der Kupplungsarm eine weit von einer Fahrbahnoberfläche entfernte Nichtgebrauchsstellung einnehmen kann,
- Figur 21: eine Anhängekupplung ähnlich derjenigen gemäß Figur 20, wobei ein Kugelkopf eines Kupplungsarms in Nichtgebrauchsstellung in eine Aufnahme eines Zugbetriebshalters eingreift, und
- Figur 22: ein weiteres Ausführungsbeispiel einer Anhängekupplung, bei der der Zugbetriebshalter eine Mitnahmehalterung bildet.

Bei den nachfolgenden Ausführungsbeispielen sind gleiche oder ähnlich wirkende Komponenten mit denselben Bezugszeichen versehen. Teilweise sind bei ähnlichen Komponenten Indizes a, b etc. verwendet, um Unterschiede kenntlich zu machen.

Eine Anhängekupplung 10a enthält einen an einem Zugbetriebshalter 11 verriegelbaren Kupplungsarm 12, an dessen vorderem, freien Ende ein Kugelkopf 13 zum Anhängen eines Anhängers 14 angeordnet ist. Der Zugbetriebshalter 11 ist an einer Trägeranordnung 15 eines Zugfahrzeugs 16 befestigt. Die Trägeranordnung 15 enthält Seitenträger 17 zur Anbindung an beispielsweise Fahrzeuglängsholme des Zugfahrzeugs 16, beispielsweise eines Personenkraftwagens, sowie einen sich zwischen den Seitenträgern 17 erstreckenden Querträger 18, an dem der Zugbetriebshalter 11 befestigt ist. Der Querträger 18 ist zwischen einem Stoßfänger 19 und einem Heckbereich einer Karosserie 20 des Zugfahrzeugs 16 angeordnet.

Der Kupplungsarm 12 ist mit einer Verriegelungseinrichtung 21 an dem Zugbetriebshalter 11 verriegelbar. Ein mit einem Handrad 22 betätigbarer Sperrbolzen 23 im Innern des Kupplungsarms 12 verdrängt Formschlusselemente, beispielsweise Kugeln 24, in Führungen 25 des Kupplungsarms nach radial außen, sodass die Kugeln 24 in eine Kugelsitzrinne 26 an dem Zugbetriebshalter 11, der als eine Art Halterohr ausgestaltet ist, eingreifen. Dabei werden Verriegelungsvorsprünge 27, die vor einen Halteabschnitt 28 des Kupplungsarms 12 seitlich vorstehen, in Verriegelungsaufnahmen 29 gezogen. Die Verriegelungsvorsprünge 27 und die korrespondierenden Verriegelungsaufnahmen 29 sind beispielsweise dreieckförmig.

In der Arbeitsstellung steht der Kupplungsarm 12 nach hinten vor das Zugfahrzeug 16 vor. Beispielsweise verläuft ein sich an den Halteabschnitt 28 anschließender Halsabschnitt 30 in der Arbeitsstellung unten am Stoßfänger 19 vorbei. Für den Halsabschnitt 30 kann eine Aussparung am Stoßfänger 19 vorgesehen sein.

Wenn die Verriegelungseinrichtung 21 gelöst wird, beispielsweise durch Betätigen des Handrades entgegen der Wirkung einer Feder, die den Sperrbolzen 23 in eine Sperrstellung spannt, kann der Kupplungsarm 12 von dem Zugbetriebshalter 11 entfernt werden. An sich wäre es nun notwendig, den Kupplungsarm 12 beispielsweise entfernt vom Zugfahrzeug 16 oder in einem Innenraum des Zugfahrzeugs 16 unterzubringen. Dies ist bei den erfindungsgemäßen Anhängekupplungen nicht der Fall:

Der Kupplungsarm 12 kann nämlich bei Nichtgebrauch in einer Mitnahmehalterung 31a der Anhängekupplung 10a untergebracht werden. Die Mitnahmehalterung 31a ist ebenso wie der Zugbetriebshalter 11 in einem Zwischenraum zwischen der Karosserie 20 und dem Stoßfänger 19 angeordnet. Somit befindet sich der Kupplungsarm 12 in seiner Nichtgebrauchsstellung N zwar außerhalb des Zugfahrzeugs 16, allerdings innerhalb eines zumindest teilweise gegen Sicht abgedeckten Ruheraums 32. Der Außenbereich des Zugfahrzeugs 16 wird somit in optimaler Weise zur Unterbringung und Verstauung des Kupplungsarms 12 genutzt. Der Ruheraum 32 wird von der Karosserie 20 und dem Stoßfänger 19 seitlich begrenzt. Auf diese Weise ist auch ein gewisser Spritzschutz oder Schutz vor sonstigen Umwelteinflüssen gewährleistet. Der Kupplungsarm 12 ist in seiner Nichtgebrauchsstellung N durch den Stoßfänger 19 gegen Sicht zumindest teilweise abgedeckt. Bei der Anhängekupplung 10a steht er beispielsweise nur mit seinem unteren, gekrümmten Bereich des Halsabschnitts 30 vor den Stoßfänger 19 nach unten vor.

Prinzipiell wäre es zwar denkbar, die Mitnahmehalterung 31 unmittelbar an der Karosserie 20 zu befestigen, beispielsweise mittels Befestigungsschrauben. Bei der Anhängekupplung 10a ist jedoch ein anderes Befestigungskonzept gewählt:

Die Mitnahmehalterung 31 ist neben dem Zugbetriebshalter 11 an dem Querträger 18 befestigt, beispielsweise angeschraubt, angeschweißt oder dergleichen. Die Schweißverbindung ist insbesondere dann zweckmäßig, wenn die Mitnahmehalterung 31 aus Metall besteht. Vorzugsweise ist die Mitnahmehalterung 31 jedoch aus einem leichten, einfach zu bearbeitenden Material, insbesondere aus Kunststoff. Aus Stabilitätsgründen kann dieser Kunststoff auch faserverstärkt sein.

Ein Gehäuse 33 der Mitnahmehalterung 31a bildet einen Schutzbehälter 34 für den Kupplungsarm 12. Eine Oberseite des Gehäuses 33 ist an einer Unterseite des Querträgers 18 befestigt. Das Gehäuse 33 ist an seiner Unterseite offen und bildet eine Art Haube. In einem von dem Zugbetriebshalter 11 entfernteren Seitenbereich 35 ist eine Kugelkopf-Aufnahme 36 für den Kugelkopf 13 vorgesehen. Die Kugelkopf-Aufnahme 36 ist eine Rastaufnahme, in die der Kugelkopf 13 eingerastet werden kann. Beispielsweise ist das Gehäuse 33 im Bereich der Kugelkopf-Aufnahme 36 federelastisch. Ein Wandbereich 37 gibt beim Einrasten des Kugelkopfes 13 in die Kugelkopf-Aufnahme 36 federnd nach, sodass der Kugelkopf 13 in die Kugelkopf-Aufnahme 36 eingerastet werden kann. Somit bildet die Kugelkopf-Aufnahme 36 ein Rastmittel 38 der Mitnahmehalterung 31a. Die Kugelkopf-Aufnahme 36 übergreift mehr als die Hälfte des Außenumfangs des Kugelkopfes 13, sodass dieser sicher in der Kugelkopf-Aufnahme 36 in seiner Nichtgebrauchsstellung N im Bereich seines vorderen Endes gehalten wird.

In der Nichtgebrauchsstellung N ist der Halteabschnitt 28 des Kupplungsarms 12 in einem Aufnahmeraum 39 der Mitnahmehalterung 31a aufgenommen. Der Aufnahmeraum 39 erstreckt sich neben der Kugelkopf-Aufnahme 36. Im Bereich der Kugelkopf-Aufnahme 36 ist das Gehäuse 33 beispielsweise massiv und/oder enthält eine verstärkende Rippenstruktur.

Im Bereich des Aufnahmeraumes 39 ist eine Halteanordnung 40 mit langgestreckten Haltevorsprüngen 41 zum Halten des Kupplungsarms 12 angeordnet. Die Haltevorsprünge 41 stehen vor Seitenwände 42 des Gehäuses 33 vor, die den Aufnahmeraum 39 seitlich begrenzen. Die Haltevorsprünge 41 sind beispielsweise an unteren Randbereichen der Seitenwände 42 einander gegenüberliegend vorgesehen. In der Nichtgebrauchsstellung N liegt der Kupplungsarm 12 auf den Haltevorsprünge 41 auf, beispielsweise mit den Verriegelungsvorsprüngen 27. Andererseits wird der Kupplungsarm 12 von der Kugelkopf-Aufnahme 36 gehalten, sodass er in der Nichtgebrauchsstellung N unverlierbar in der Mitnahmehalterung 31a aufgenommen ist.

Nun wäre es möglich, den Kupplungsarm 12 beispielsweise zunächst in die Halteanordnung 40 einzuhängen und sodann in die Kugelkopf-Aufnahme 36 sozusagen einzurasten. Wenn die Seitenwände 42 biegefest sind, könnten beispielsweise an den Haltevorsprüngen 41 oder neben diesen Einführöffnungen vorgesehen sein. Solche Bereiche sind durch Pfeile 43 angedeutet. Der Kupplungsarm 12 wird dann zur Befestigung an der Mitnahmehalterung 31a an den Haltevorsprüngen 41 vorbei in einem der Bereiche 43 in den Aufnahmeraum 39 eingeschoben und sodann seitlich verfahren, sodass die Verriegelungsvorsprünge 27 auf den Haltevorsprüngen 41 aufliegen. Sodann wird der Kugelkopf 13 in die Kugelkopf-Aufnahme 36 eingerastet. Der Kupplungsarm 12 kann in umgekehrter Bedienreihenfolge aus der Mitnahmehalterung 31a entnommen werden.

Bei der Anhängekupplung 10a ist jedoch eine andere Funktionsweise gegeben: Die Seitenwände 42 sind biegeelastisch und bilden daher Rastmittel 44. Der Kupplungsarm 12 kann in die Halteanordnung 40 leicht eingerastet werden, indem er in den Aufnahmeraum 39 eingesteckt wird, wobei er die Haltevorsprünge 41 und somit die Seitenwände 42 nach außen auswölbt. Wenn die verriegelungsvorsprünge 27 an den Haltevorsprüngen 41 vorbeigeglitten sind, schnappen die Seitenwände 42 wieder zum Aufnahmeraum 39 hin nach innen, sodass die Haltevorsprünge 41 die Verriegelungsvorsprünge 27 des Kupplungsarms 12 untergreifen und halten.

Die Mitnahmehalterung 31a ist universell verwendbar und nicht auf einen einzigen Typ eines Kupplungsarms, beispielsweise den Kupplungsarm 12, festgelegt. Die Mitnahmehalterung 31a kann somit auch mit anderen Typen von Kupplungsarmen verwendet werden, nämlich beispielsweise mit Kupplungsarmen 12b und 12c von Anhängekupplungen 10b und 10c. Dadurch ist die Mitnahmehalterung 31a universell einsetzbar, was die Fertigung vereinfacht. Auch im Zusammenhang mit der Nachrüstung ist es vorteilhaft, wenn möglichst wenig verschiedene Typen erfindungsgemäßer Mitnahmehalterungen vorgehalten werden müssen. Dabei macht man sich zunutze, dass die Kugelköpfe ein Normmaß aufweisen, sodass die Kugelkopf-Aufnahme 36 sozusagen immer passt.

Der Aufnahmeraum 39 hingegen ist derart langgestreckt, dass auch der Kupplungsarm 12b mit einem großen Abstand zwischen seinem Kugelkopf 13 und seinem Halteabschnitt 28, das heißt mit einem langen Halsabschnitt 30b, in der Mitnahmehalterung 31a Platz findet. Dazu ist ein Abstand zwischen einer hinteren Wand 45 des Gehäuses 33 und der Kugelkopf-Aufnahme 36 entsprechend groß. Ferner erstrecken sich die Haltevorsprünge 41 über die gesamte Länge des unteren Randes der Seitenwände 42, sodass der Kupplungsarm 12b auch nahe der Wand 45 haltende Unterstützung findet. Zum leichten Einrasten in das Gehäuse 33 kann der Kupplungsarm 12b zunächst in einem mittleren Abschnitt 46 der Seitenwände 42 eingerastet werden, wo die Seitenwände 42 besonders gut nach außen vom Aufnahmeraum 39 weg federn. Sodann wird der Kupplungsarm 12b in Richtung der Wand 45, die sich bei der Anhängekupplung 10b nahe dem Zugbetriebshalter 11 befindet, seitlich verschoben.

Beim Kupplungsarm 12c verfährt man gerade umgekehrt und verschiebt diesen beispielsweise vom mittleren Abschnitt 46 in Richtung des der Wand 45 entgegengesetzten Seitenbereichs des Aufnahmeraums 39 in Richtung der Kugelkopf-Aufnahme 36. Der Kupplungsarm 12c hat nämlich einen verhältnismäßig kurzen Halsabschnitt 30c, das heißt einen kleinen Abstand zwischen seinem Halteabschnitt 28 zum Einstecken in den Zugbetriebshalter 11 und seinem Kugelkopf 13. Auch für diesen kleinen Kupplungsarm 12c eignet sich die Mitnahmehalterung 31a.

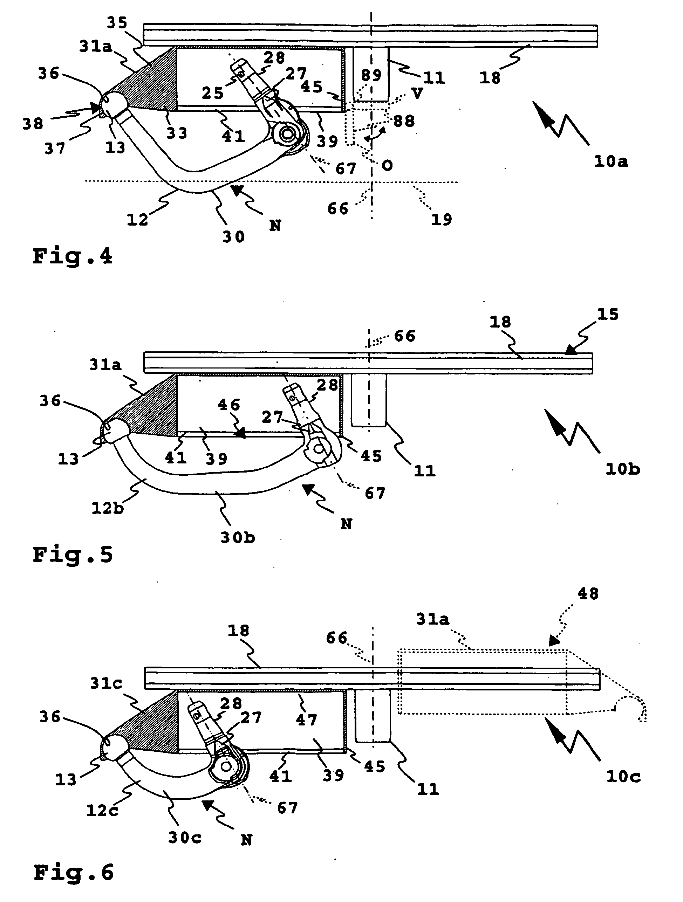

Die Mitnahmehalterung 31a ist an der Unterseite des Querträgers 18 befestigt. Beispielsweise ist eine obere Wand 47.des Gehäuses 33 an den Querträger 18 angeschraubt. Es versteht sich, dass eine alternative Anbringungsart der Mitnahmehalterung 31a ohne weiteres möglich ist, beispielsweise eine weiter oben liegende, sofern sich der Ruheraum 32 entsprechend weit nach oben erstreckt. In Figur 6 ist dies durch eine mit einem Pfeil 48 angedeutete Anbringungsposition realisiert.

An der Mitnahmehalterung 31a kann auch ein Deckel 88 zum Verschließen des Zugbetriebshalters 11 angeordnet sein. Der Deckel 88 ist vorzugsweise zwischen einer den Zugbetriebshalter 11 verschließenden Verschlussstellung V und einer Offenstellung 0 an der Mitnahmehalterung 31a beweglich gelagert. Der Deckel 88 ist z.B. an einem Schwenklager 89 schwenkbar gelagert, z.B. an der wand 45.

Eine Mitnahmehalterung 31d einer Anhängekupplung 10d ist schwenkbeweglich bezüglich des Zugfahrzeugs 16. Beispielsweise ist das Gehäuse 33 an einem Schwenkhalter 49 befestigt, beispielsweise angeschraubt oder angeklebt, der mit einem Schwenklager 50 schwenkbeweglich zum Querträger 18 ist. Das Schwenklager 50 ist an einer Seitenwand des Querträgers 18 befestigt. Die Mitnahmehalterung 31d kann aus einer Fahrposition F in eine Entnahmeposition E geschwenkt werden. In der Entnahmeposition E ist die Mitnahmehalterung 31d nach unten vor den Stoßfänger 19 geschwenkt, sodass der Kupplungsarm 12d leicht entnommen werden kann.

Das Gehäuse 33 und der Kupplungsarm 12d könnten z.B. durch ein Band, zweckmäßigerweise aus einem elastischen Material, in der Fahrposition F gehalten werden. Bei der Anhängekupplung 10d ist jedoch eine Halteeinrichtung S1 vorgesehen, die den Kupplungsarm 12d in der Fahrposition F in einer Haltestellung in der Mitnahmehalterung 31d hält. Die Halteeinrichtung 51 ist schwenkbar und enthält beispielsweise einen Schwenkbügel 52, der an einem Schwenkbügel-Lager 53 schwenkbar gelagert ist. Das Schwenkbügel-Lager 53 ist am Querträger 18 befestigt. Das Schwenkbügel-Lager 53 und das Schwenklager 50 sind zueinander beabstandet und befinden sich beispielsweise an entgegengesetzten Seiten des Zugbetriebehalters 11. Es versteht sich, dass beide Lager 50, 53 sich auch an derselben Seite neben dem Zugbetriebshalter 11 befinden könnten.

Eine Schwenkachse 85 der Mitnahmehalterung 31d und eine Schwenkachse 86 des Schwenkbügels 52 sind zueinander rechtwinkelig.

Die Halteeinrichtung 51 hält die Mitnahmehalterung 31d in der Fahrposition F unabhängig davon, ob der Kupplungsarm 12d im Gehäuse 33 angeordnet ist oder nicht.

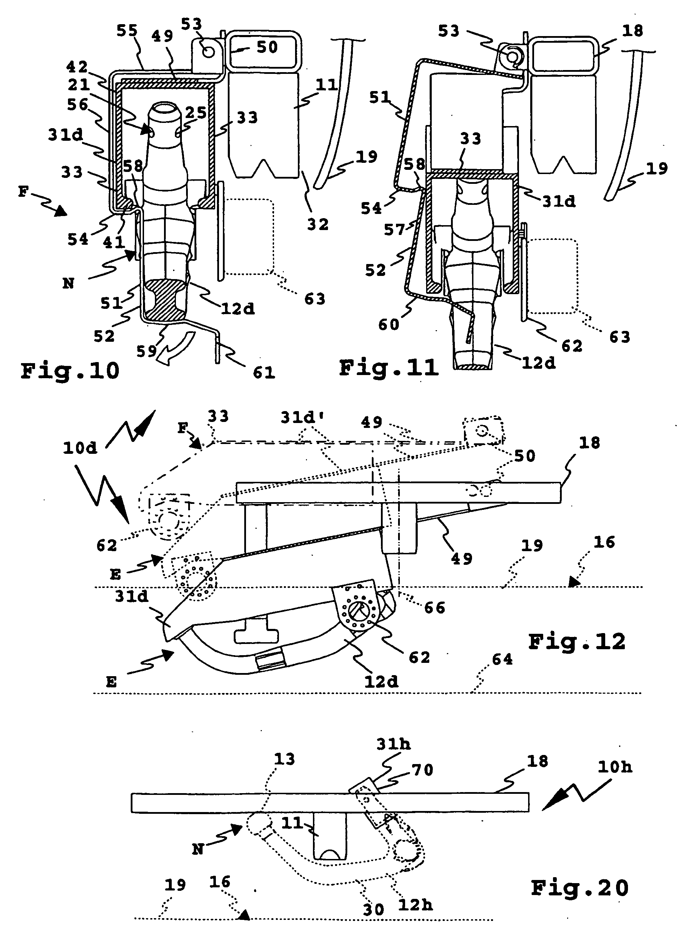

Der Schwenkbügel 52 umgreift das Gehäuse 33 von oben her. In der Fahrposition F untergreift eine Halteschulter 54 des Schwenkbügels 52 den unteren Rand der in der Figur 10 linken Seitenwand 42.

Die Halteschulter 54 verläuft etwa parallel zu einem oberen Bügelarm 55, der sich vom Schwenkbügel-Lager 53 weg erstreckt. Zwischen dem Bügelarm 55 und der Halteschulter 54 verläuft ein Bügelabschnitt 56 des Schwenkbügels 52. In der Haltestellung der Halteeinrichtung 51 verläuft der Bügelabschnitt 56 neben der Seitenwand 42.

In der Haltestellung der Halteeinrichtung 51 verläuft ein Bügelabschnitt 57 des Schwenkbügels 52 neben dem Kupplungsarm 12d, Ein Biegeabschnitt 58 zwischen dem Bügelabschnitt 57 und der Halteschulter 54 greift in einen Zwischenraum zwischen dem Haltevorsprung 41 und dem Kupplungsarm 12d ein, sodass der Kupplungsarm 12d fest in dem Gehäuse 33 gehalten ist.

Zum festen Halten des Kupplungsarms 12d in der Mitnahmehalterung 31d trägt auch bei, dass ein vorderer Endbereich 59 des Schwenkbügels 52 den Kupplungsarm 12d in der Haltestellung beziehungsweise der Fahrposition F untergreift. Der vordere Endbereich 59 hat einen Halteabschnitt 60, der federnd ist. Der vordere Endbereich 59 bildet ein Federende. Der Schwenkbügel 53 kann an einem Handgriffabschnitt 61 ergriffen werden, wobei der Haltebereich 60 vom Kupplungsarm 12d weg nach unten gebogen wird, sodass der vordere Endbereich 59 am Kupplungsarm 12d vorbeigleitet und diesen freigibt. Zugleich gelangt die Halteschulter 54 außer Eingriff mit dem Gehäuse 33, sodass dieses nach unten schwenken kann. In der nach unten geschwenkten Entnahmeposition E kann der Kupplungsarm 12d leicht ergriffen und aus dem Gehäuse 33 entnommen werden.

Wenn der Kupplungsarm 12d aus der Mitnahmehalterung 31d entnommen ist, wird diese wieder nach oben und der Schwenkbügel 52 nach vorn geschwenkt, sodass die Halteschulter 54 die Seitenwand 42 wieder untergreift und somit das Gehäuse 33 in der Fahrposition F hält.

Der Biegeabschnitt 58 ist korrelierend mit dem Verlauf des unteren Randes der Seitenwand 42 ausgeformt, sodass der Biegeabschnitt 58 unter die Seitenwand 42 rastet und das Gehäuse 33 somit sicher in der Fahrposition F hält. Der Schwenkbügel 52 verrastet somit mit der Mitnahmehalterung 31d, auch wenn der Kupplungsarm 12d entnommen ist. Der Biegeabschnitt 58 der Halteeinrichtung 51 und der federnde Haltebereich 60 verrasten mit der Mitnahmehalterung 31d bzw. dem Kupplungsarm 12d und bilden Rasteinrichtungen 87 für Rastverbindungen.

Eine erfindungsgemäße Mitnahmehalterung kann auch einen Zusatznutzen dergestalt haben, dass beispielsweise eine Steckdose für den Anhänger 14 an ihr angeordnet sein kann. So ist beispielsweise an dem Gehäuse 33 eine Steckdosen-Halterung 62 für eine Steckdose 63 vorhanden. Die Steckdosen-Halterung 62 steht nach unten vor die in Fahrtrichtung gesehen hintere Seitenwand 42 des Gehäuses 33 vor.

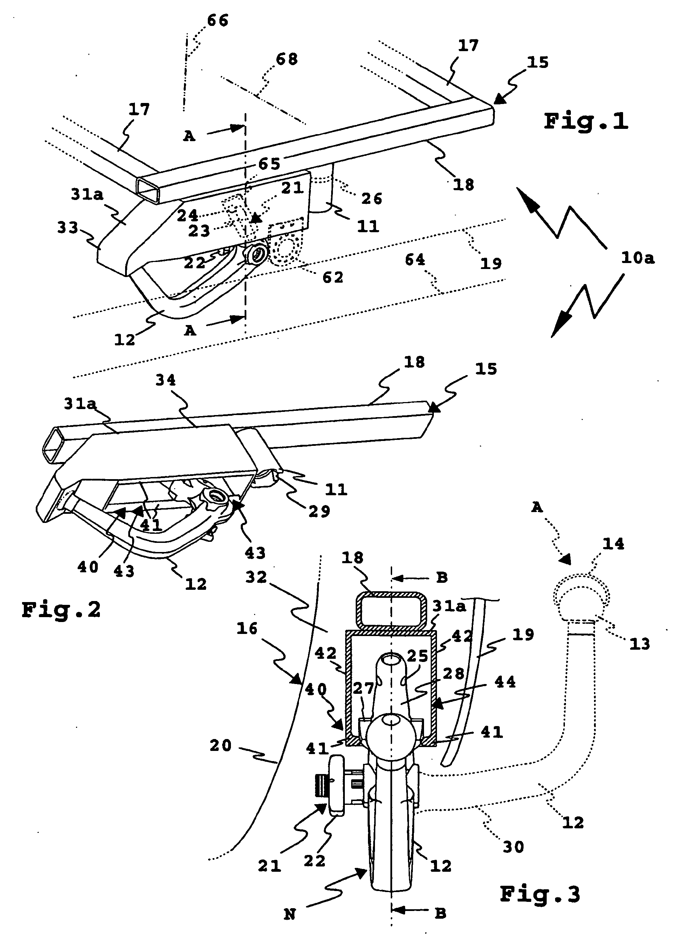

Es versteht sich, dass auch bei einer feststehenden erfindungsgemäßen Mitnahmehalterung eine Steckdosen-Halterung 62 vorgesehen sein kann. Dies ist beispielsweise in Figur 1 angedeutet, wo die Steckdosen-Halterung 62 an dem Gehäuse 33 angeordnet ist.

Eine Beweglichkeit einer erfindungsgemäßen Mitnahmehalterung, z.B. die Schwenkfunktion des Gehäuses 33, kann einen vorteilhaften Nutzen im Hinblick auf eine Steckdosen-Halterung haben. Für den Anhängebetrieb kann es bei einer Steckdose nämlich zweckmäßig sein, dass sie in eine Betriebsposition, z.B. nach unten und/oder nach hinten vor einen stoßfänger, geschwenkt ist. Dies ist bei dem in Figur 12 gestrichelt dargestellten Ausführungsbeispiel der Fall. Dort ist der Schwenkhalter 49 weiter entfernt von einer Fahrbahnoberfläche schwenkbar am Zugfahrzeug 16 befestigt, beispielsweise an dessen Karosserie 20. Die Steckdosen-Halterung 62 ist an einem möglichst weit vom Schwenklager 50 entfernten Punkt, beispielsweise im Bereich der Kugelkopf-Aufnahme 36, angeordnet und steht nach unten vor das Gehäuse 33 der Mitnahmehalterung 31d' vor. Wenn die Mitnahmehalterung 31d' in ihre Entnahmeposition E geschwenkt ist, das heißt nach unten, steht die Steckdose 63 an der Steckdosen-Halterung 62 nach unten vor den Stoßfänger 19 zumindest teilweise vor und ist somit leicht zugänglich.

Vorteilhaft ist die Einbaulage der Mitnahmehalterung 31d' auch für den Kupplungsarm 12d in seiner Nichtgebrauchsstellung N. In der nach oben geschwenkten Fahrposition F der Mitnahmehalterung 31d' ist der an ihr angeordnete Kupplungsarm 12d (nicht dargestellt) verhältnismäßig weit von einer Fahrbahnoberfläche 64 entfernt, sodass die Bodenfreiheit des Zugfahrzeugs 16 nicht beeinträchtigt ist.

Die Kupplungsarme 12 bis 12d stehen in ihrer Nichtgebrauchsstellung N zu einer vertikalen Fahrzeughochachse 66 des Zugfahrzeugs 16 schräg. Beispielsweise verläuft eine Längserstreckungsachse 67 der jeweiligen Halteabschnitte 28 schräg geneigt zu der Fahrzeughochachse 66.

Ferner sind die Kupplungsarme 12, 12b bis 12d in ihrer jeweiligen Nichtgebrauchsstellung N quer zu einer Fahrzeuglängsachse 68 positioniert. Die Halsabschnitte 30, 30b, 30c verlaufen rechtwinkelig zur Fahrzeuglängsachse 68.

Anstelle beispielsweise der Halteanordnung 40 können auch andere Haltemittel an oder in einem erfindungsgemäßen Schutz-Gehäuse vorgesehen sein. So könnte beispielsweise in dem Aufnahmeraum 39 eine Halteaufnahme 65 angeordnet sein, in die der Halteabschnitt 28 des Kupplungsarms 12 eingesteckt wird. Beispielsweise kann der Kupplungsarm 12 mit der Verriegelungseinrichtung 21 an der Halteaufnahme 65 verriegelt werden, wobei zum Beispiel die beweglichen Formschlusselemente, zum Beispiel die Kugeln 24, in korrespondierende Formschlusskonturen an der Halteaufnahme 65 eingreifen. Die Halteaufnahme 65 ist beispielsweise ein Halterohr. Ein solches Konzept ist bei den nachfolgenden Ausführungsbeispielen, allerdings ohne ein zusätzliches Schutz-Gehäuse, realisiert:

Der Zugbetriebshalter 11 ist als eine Zugbetriebsaufnahmehülse 69 ausgestaltet. Ein ähnliches Konzept ist bei einer Mitnahme-Aufnahmehülse 70 einer Anhängekupplung 10e realisiert. Die Mitnahme-Aufnahmehülse 70 hat einen Innenquerschnitt, der mit dem Außenumfang des Halteabschnitts 28 korreliert. Die Mitnahme-Aufnahmehülse 70 ist als ein Aufnahmerohr ausgestaltet. Die Mitnahme-Aufnahmehülse 70 ist an dem Querträger 18 neben dem Zugbetriebshalter 11 befestigt. Bei Nichtgebrauch kann der Kupplungsarm 12 aus dem Zugbetriebshalter 11 entnommen und in die Mitnahme-Aufnahmehülse 70 eingesteckt werden, wo er platzsparend im Ruheraum 32 untergebracht ist.

In seiner Nichtgebrauchsstellung N ist der Kupplungsarm 12 weiter von der Fahrbahnoberfläche 64 entfernt angeordnet als in seiner Arbeitsstellung A. Eine untere, einen Anschlag für den Kupplungsarm 12 bildende Stirnseite 71 ist weiter von der Fahrbahnoberfläche 64 entfernt als eine untere Stirnseite 72 des Zugbetriebshalters 11. In der Nichtgebrauchsstellung steht der Kugelkopf 13 nach oben vor den Querträger 18 vor. In der Nichtgebrauchsstellung N ist der Kupplungsarm 12 beispielsweise zwischen dem Querträger 18 und der Karosserie 20 angeordnet.

Die Mitnahme-Aufnahmehülse 70 ist seitlich neben dem Zugbetriebshalter 11, oberhalb desselben an dem Querträger 18 angeordnet. Während die Zugbetriebsaufnahmehülse 69 an der Unterseite des Querträgers 18 befestigt ist, ist die Mitnahme-Aufnahmehülse 70 an einer Seitenwand 73 befestigt. Beispielsweise ist die Mitnahme-Aufnahmehülse 70 mit einem Haltestück 74 an die Seitenwand 73 angeschweißt.

Die mechanische Belastbarkeit der Mitnahme-Aufnahmehülse 70 kann geringer sein als diejenige der Zugbetriebsaufnahmehülse 69. Daher ist es beispielsweise möglich, die Mitnahme-Aufnahmehülse 70 aus Kunststoff oder verhältnismäßig dünnem Blechmaterial zu fertigen.

Die Verriegelungseinrichtung 21 wird in vorteilhafter Weise dazu genutzt, den Kupplungsarm 12 an der Mitnahme-Aufnahmehülse 70 zu befestigen. Die Mitnahme-Aufnahmehülse 70 hat verriegelungsmittel 75, die mit den Zugbetriebshalter-Verriegelungsmitteln 76 der Verriegelungseinrichtung 21 zusammenwirken. Die Verriegelungsmittel 75 enthalten Formschlusskonturen 77, in die Formschlusskonturen der Verriegelungseinrichtung 21 eingreifen, beispielsweise die Verriegelungsvorsprünge 27 und bewegliche Formschlusskonturen, zum Beispiel die Kugeln 24.

An der unteren Stirnseite 71 der Mitnahme-Aufnahmehülse 70 sind Verriegelungsaufnahmen 78 in der Art der verriegelungsaufnahmen 29 als weitere Formschlusskonturen 77 vorgesehen. In der Nichtgebrauchsstellung N greifen die kupplungsarmseitigen Verriegelungsvorsprünge 27 in die Verriegelungsaufnahmen 78 ein.

In einem Innenraum der Mitnahme-Aufnahmehülse 70 könnte ferner eine Kugelsitzrinne 26 vorgesehen sein, in die die Kugeln 24 in der verriegelungsstellung der Verriegelungseinrichtung 21 eingreifen. Bei der Mitnahme-Aufnahmehülse 70 ist jedoch ein anderes Konzept realisiert. Im Innenraum ist nämlich ein ringförmiger Haltevorsprung 79 vorgesehen, an dem sich die Kugeln 24 abstützen, wenn sie durch den Sperrkörper oder Sperrbolzen 23 nach radial außen verdrängt sind. Der Haltevorsprung 79 ist in seinem Auflagebereich für die Formschlusselemente 24 zweckmäßigerweise schräg, z.B. konisch, was in zusammenwirkung mit der in die Haltestellung federbelasteten Verriegelungseinrichtung 21, z.B. den in ihre nach radial außen verdrängte Haltestellung federbelasteten Kugeln 24, einen Selbstnachstelleffekt hat.

Zwischen dem Haltevorsprung 79 und dem unteren Rand der Mitnahme-Aufnahmehülse 70, das heißt der unteren Stirnseite 71, ist zweckmäßigerweise ein Führungsvorsprung 80 zum Führen des zweckmäßigerweise domartigen Halteabschnittes 28 vorgesehen.

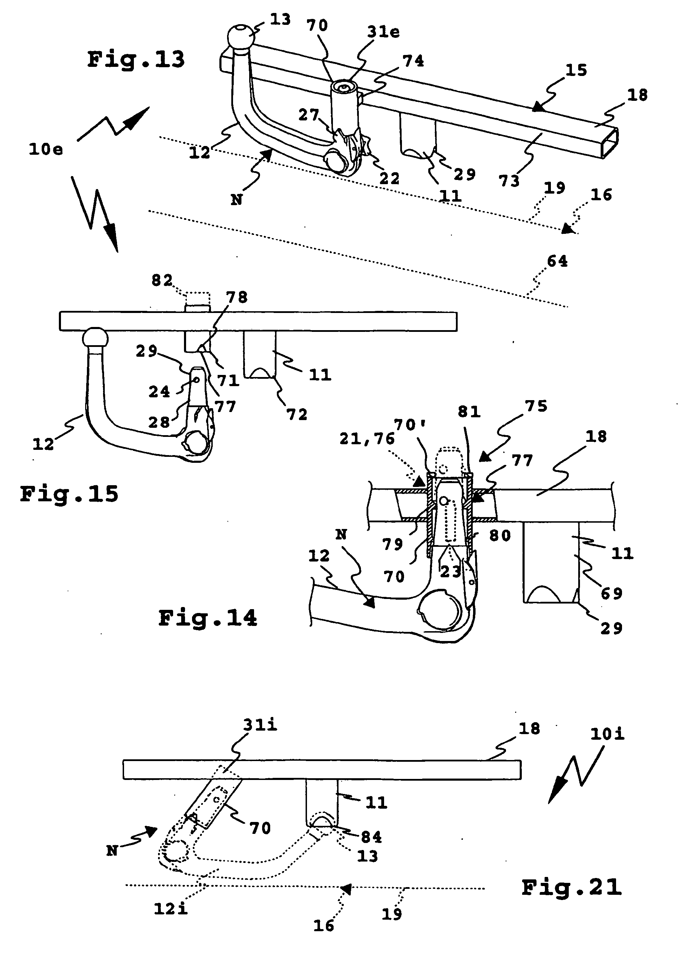

In Figur 14 ist ein weiteres Konzept für eine erfindungsgemäße Mitnahme-Aufnahmehülse dargestellt. Das vordere, freie Ende des Halteabschnitts 28 des Kupplungsarms 12 steht nach oben vor eine mitnahme-Aufnahmehülse 70' vor, sodass sich die Kugeln 24, wenn die Verriegelungseinrichtung 21 in Haltestellung ist, am oberen Rand 81 der Mitnahme-Aufnahmehülse 70' abstützen. Der Rand 81 verläuft nahe am vorderen Außenumfang des Halteabschnitts 28. Dazu könnte die Mitnahme-Aufnahmehülse 70' oben verengt sein, z.B. konisch entsprechend der domartigen Gestalt des Halteabschnitts 28 verlaufen. Ferner kann die Aufnahmehülse 70' beispielsweise nach innen umgebördelt oder ein ringförmiges Endstück an der Oberseite der Aufnahmehülse 70' angeordnet sein.

Die Mitnahme-Aufnahmehülse 70 ist oben offen. Dies kann im Zusammenwirken mit dem oben durch den Stoßfänger 19 und/oder die Karosserie 20 im Wesentlichen geschlossenen Ruheraum 32 ausreichend sein, um die verriegelungseinrichtung 21 vor Umwelteinflüssen zu schützen. Es ist aber auch möglich, dass eine erfindungsgemäße Mitnahme-Aufnahmehülse oben geschlossen ist, beispielsweise durch einen Deckel 82, vorzugsweise eine Schutzkappe.

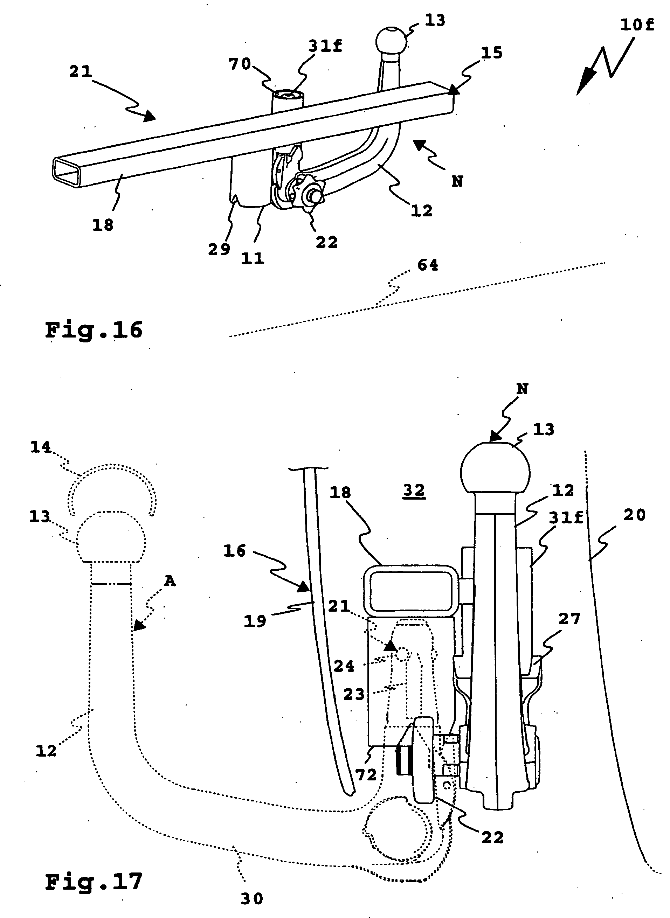

Bei einer Anhängekupplung 10f enthält eine Mitnahmehalterung 31f ebenfalls eine Mitnahme-Aufnahmehülse 70. Die Mitnahme-Aufnahmehülse 70 ist unmittelbar neben dem Zugbetriebshalter 11 positioniert, allerdings seitlich versetzt und oberhalb des Zugbetriebshalters 11. Dadurch nimmt der Kupplungsarm 12 in seiner Nichtgebrauchsstellung N eine weit entfernte Stellung von der Fahrbahnoberfläche 64 ein. Der Kupplungsarm 12 ist in seiner Nichtgebrauchsstellung N parallel zum Querträger 18 angeordnet und beansprucht seitlich neben dem Zugbetriebshalter 11 verhältnismäßig wenig Platz. Der Kupplungsarm 12 ist beispielsweise zwischen dem Querträger 18, der nahe dem Stoßfänger 19 verläuft, und der Karosserie 20 positioniert. Die platzsparende Unterbringung ist besonders in Figur 17 gut ersichtlich. In seiner Arbeitsstellung A jedoch verläuft der Halsabschnitt 30 unterhalb des Stoßfängers 19 vorbei, sodass der Kugelkopf 13 nach hinten vor das Zugfahrzeug 16 vorsteht. In der Nichtgebrauchsstellung N ist die Anhängekupplung 10f vollständig gegen Sicht abgedeckt. Eine Oberseite des Halsabschnitts 30 ist in der Nichtgebrauchsstellung N oberhalb der unteren Stirnseite 72 des Zugbetriebshalters 11 angeordnet.

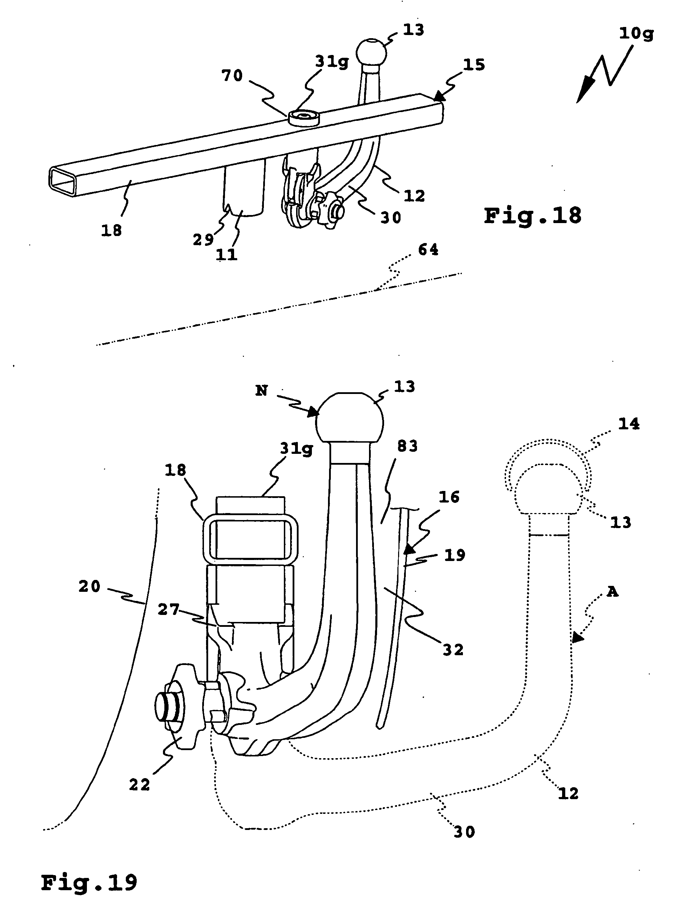

Bei einer Anhängekupplung 10g gemäß Figuren 18, 19 ist eine weitere alternative Anbringungsart der Mitnahme-Aufnahmehülse 70 realisiert, die als Mitnahmehalterung 31g dient. Während der Zugbetriebshalter 11 an der Unterseite des Querträgers 18 befestigt ist, durchdringt die Mitnahme-Aufnahmehülse 70 den Querträger 18. Dadurch ist eine von der Fahrbahnoberfläche 64 entfernte Nichtgebrauchsstellung N des Kupplungsarms 12 realisiert. Der Kupplungsarm 12 verläuft bezüglich einer Fahrzeugquerachse beziehungsweise des Querträgers 18 schräg.

Der Halsabschnitt 30 verläuft am Querträger 18 vorbei, sodass sein vorderes Ende mit dem Kugelkopf 13 seitlich am Querträger 18 vorbei nach oben vorsteht. Der Kugelkopf 13 befindet sich oberhalb des Querträgers 18 in der Nichtgebrauchsstellung des Kupplungsarms 12. Der Kugelkopf 13 sowie das vordere, nach oben vorstehende Ende des Kupplungsarms 12 sind in einem Zwischenraum 83 zwischen dem Stoßfänger 19 und dem Querträger 18 in der Nichtgebrauchsstellung N angeordnet.

Es versteht sich, dass nicht nur in Bezug auf die Fahrzeugquerrichtung, sondern auch in Bezug auf die Fahrzeughochachse 66 eine Schräglage mit einer Mitnahme-Aufnahmehülse 70 realisierbar ist. Dies ist beispielsweise bei der Anhängekupplung 10h gemäß Figur 20 realisiert. Die Mitnahme-Aufnahmehülse 70 ist seitlich am Querträger 18, allerdings in Schräglage, beispielsweise an der Seitenwand 73 befestigt, zum Beispiel angeschweißt oder angeklebt. Wenn ein Kupplungsarm 12h in die Mitnahme-Aufnahmehülse 70 eingesteckt ist und somit seine Nichtgebrauchsstellung N einnimmt, verläuft sein Halsabschnitt 30 am Zugbetriebshalter 11 vorbei. Ferner ist der Halsabschnitt weiter von einer in der Zeichnung nicht dargestellten Fahrbahnoberfläche 64 entfernt als in seiner Arbeitsstellung A, wenn der Kupplungsarm 12h in den Zugbetriebshalter 11 eingesteckt ist.

Ferner kann eine erfindungsgemäße Mitnahmehalterung so platziert sein, dass der Kupplungsarm in seiner Nichtgebrauchsstellung N einen Schutz für den Zugbetriebshalter bildet. Bei einer Anhängekupplung 10i bildet die Mitnahme-Aufnahmehülse 70 eine Mitnahmehalterung 31i. Wenn ein Kupplungsarm 12i in die Mitnahme-Aufnahmehülse 70 in seiner Nichtgebrauchsstellung N eingesteckt ist, verschließt sein Kugelkopf 13 eine Einstecköffnung 84 des Zugbetriebshalters 11.

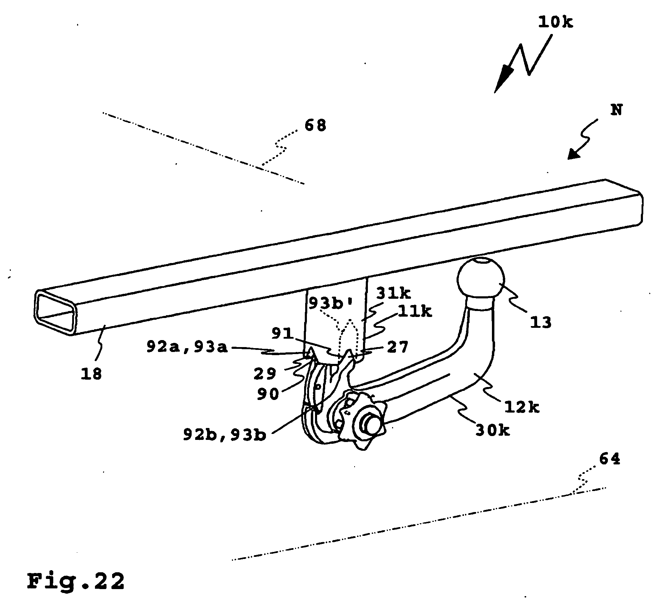

Bei einer Anhängekupplung 10k gemäß Figur 22 bildet ein Zugbetriebshalter 11k eine Mitnahmehalterung 31k. Der Zugbetriebshalter 11k hat eine Steckaufnahme 90, in die ein Halteabschnitt 28 eine Kupplungsarm 12k eingesteckt werden kann. Der Kupplungsarm 12k entspricht bis auf seine Halsgeometrie dem Kupplungsarm 12. Ein Halsabschnitt 30k, an dessen oberem Ende der Kugelkopf 13 befestigt ist, baut gegenüber dem Halsabschnitt 30 verhältnismäßig flach. Dementsprechend ist es ohne weiteres möglich, den Kupplungsarm 12k in der Arbeitsstellung A (nicht dargestellt) und auch in der in Figur 22 dargestellten Nichtgebrauchsstellung N am Zugbetriebshalter 11k anzuordnen. In der Nichtgebrauchsstellung N verläuft der Kupplungsarm 12, insbesondere dessen Halsabschnitt 30k, etwa parallel zum Querträger 18, an dem der Zugbetriebshalter 11k angeordnet ist. Der Kugelkopf 13 ist unterhalb des Querträgers 18 angeordnet.

Für die Arbeitsstellung A hat der Zugbetriebshalter 11k die aus der vorhergehenden Beschreibung bekannten Verriegelungsaufnahmen 29 für die Verriegelungsvorsprünge 27. Für die Nichtgebrauchsstellung N sind zusätzliche Verriegelungsaufnahmen 91 vorgesehen. Die verriegelungsaufnahmen 29, 91 sind zueinander winkelverdreht, zweckmäßigerweise etwa um 90°, so dass der Kupplungsarm 12k in einer zur Arbeitsstellung A winkeligen Position, vorliegend etwa um 90° geschwenkten Position, in die Steckaufnahme 90 einsteckbar ist.

Die Verriegelungsaufnahmen 29, 91 bilden erste und zweite Verriegelungsmittel 92a, 92b. Die Verriegelungsaufnahmen 91 umfassen ferner Formschlusskonturen 93a, 93b, die der Arbeitsstellung A bzw. der Nichtgebrauchsstellung N zugeordnet sind.

Damit der Kupplungsarm 12k in der Nichtgebrauchsstellung N eine bezüglich der Fahrbahnoberfläche 64 weiter oben liegende Stellung einnehmen kann, ist es möglich, dass beispielsweise anstelle der Formschlusskonturen 93b tiefere Formschlusskonturen 93b' bzw. Verriegelungsaufnahmen 91' vorgesehen sind. Dann kann es zweckmäßig sein, dass beispielsweise im Querträger 18 eine Ausnehmung oder eine Einbuchtung für den Kugelkopf 13 vorhanden ist.

Es versteht sich, dass Formschlusskonturen in der Art der Formschlusskonturen 93b' zudem noch einen anderen Winkelversatz zu den Formschlusskonturen 93a aufweisen können, so dass der Kugelkopf 13 in der Nichtgebrauchsstellung N beispielsweise neben dem Querträger 18 oder oberhalb des Querträgers 18 angeordnet ist und zwar beispielsweise in Fahrtrichtung vorn des Zugfahrzeugs 16 oder auch in Fahrtrichtung hinten gesehen.

## Patentansprüche

1. Anhängekupplung mit einem an einem Zugfahrzeug (16) befestigbaren Zugbetriebshalter (11; 11k), einem an dem Zugbetriebshalter (11; 11k) mit einer Verriegelungseinrichtung (21) zumindest in einer zum ziehen eines Anhängers (14) vorgesehenen Arbeitsstellung (A) verriegelbaren, einen Kugelkopf (13) aufweisenden Kupplungsarm (12; 12b-12e; 12h; 12i; 12k), der bei Nichtgebrauch in einer Freigabestellung der Verriegelungseinrichtung (21) von dem Zugbetriebshalter (11; 11k) entfernbar ist, wobei sie eine außen im Heckbereich des Zugfahrzeugs (16) gegen Sicht zumindest teilweise abgedeckt lösbar befestigbare Mitnahmehalterung (31a-31k) zum Halten des Kupplungsarmes (12; 12b-12e; 12h; 12i; 12k) in einer Nichtgebrauchsstellung (N) aufweist und wobei der Zugbetriebshalter (11; 11k) eine Zugbetriebsaufnahmehülse (69) aufweist, wobei die Mitnahmehalterung (31a-31k) eine von dem Zugbetriebshalter (11; 11k) separate Mitnahme-Aufnahmehülse in der Art der Zugbetriebsaufnahmehülse (69) umfasst, und wobei die Mitahmehalterung (31a-31k) Verriegelungsmittel (75) aufweist, die mit Komponenten der Verriegelungseinrichtung (21) am Kupplungsarm (12; 12b-12e; 12h; 12i; 12k), insbesondere in der Art wie Zugbetriebshalter-Verriegelungsmittel (76) des Zugbetriebshalters (11; 11k), zusammenwirken, **dadurch gekennzeichnet, dass** die Komponenten der verriegelungseinrichtung (21) des Kupplungsarms (12; 12b-12e; 12h; 12i; 12k) am Kupplungsarm (12; 12b-12e; 12h; 12i; 12k) beweglich gelagerte Verriegelungskörper umfassen.

2. Anhängekupplung nach Anspruch 1, **dadurch gekennzeichnet, dass** der Kupplungsarm (12; 12b-12e; 12h; 12i; 12k) in der Nichtgebrauchsstellung (N) weiter von einer Fahrbahnoberfläche (64) entfernt ist als in der Arbeitsstellung (A), wenn die Anhängekupplung (10a-10k) an dem Zugfahrzeug (16) montiert ist.

3. Anhängekupplung nach Anspruch 1 oder 2, **dadurch gekennzeichnet, dass** der Kupplungsarm (12; 12b-12e; 12h; 12i; 12k) in seiner Nichtgebrauchsstellung (N) zu einer vertikalen Fahrzeughochachse (66) des Zugfahrzeugs (16) schräg steht, wenn die Anhängekupplung (10a-10k) an dem Zugfahrzeug (16) montiert ist.

4. Anhängekupplung nach einem der vorhergehenden Ansprüche, **dadurch gekennzeichnet, dass** sich der Kupplungsarm (12; 12b-12e; 12h; 12i; 12k) in seiner Nichtgebrauchsstellung (N) quer, insbesondere etwa rechtwinkelig, zu einer Fahrzeuglängsachse (68) des Zugfahrzeugs (16) erstreckt, wenn die Anhängekupplung (10a-10k) an dem Zugfahrzeug (16) montiert ist.

5. Anhängekupplung nach einem der vorhergehenden Ansprüche, **dadurch gekennzeichnet, dass** der Kupplungsarm (12; 12b-12e; 12h; 12i; 12k) in der Nichtgebrauchsstellung (N) in einem Ruheraum (32) zwischen einer Trägeranordnung (15) und dem Stoßfänger (19) oder zwischen der Trägeranordnung (15) und einer Karosserie (20) des Zugfahrzeugs (16) angeordnet ist, wenn die Anhängekupplung (10a-10k) an dem Zugfahrzeug (16) montiert ist.

6. Anhängekupplung nach Anspruch 5, **dadurch gekennzeichnet, dass** der Zugbetriebshalter (11; 11k) und die Mitnahmehalterung (31a-31k) an der Trägeranordnung (15), insbesondere an einem sich zwischen einer Karosserie (20) des Zugfahrzeugs (16) und einem Stoßfänger (19) des Zugfahrzeugs (16) angeordneten Querträger (18), angeordnet sind, wenn die Anhängekupplung (10a-10k) an dem Zugfahrzeug (16) montiert ist.

7. Anhängekupplung nach Anspruch 1, **dadurch gekennzeichnet, dass** die Verriegelungsmittel (75) Formschlusskonturen (77) aufweisen, in die Formschlusskonturen der Verriegelungseinrichtung (21) am Kupplungsarm (12; 12b-12e; 12h; 12i; 12k) eingreifen.

8. Anhängekupplung nach einem der vorhergehenden Ansprüche, **dadurch gekennzeichnet, dass** der Zugbetriebshalter (11k) die Mitnahmehalterung (31k) bildet, dass der Zugbetriebshalter (11k) eine Steckaufnahme (90) zur Aufnahme des Kupplungsarms (12k) in der Arbeitsstellung (A) und für eine Funktion des Zugbetriebshalters (11k) als Mitnahmehalterung (31k) in der Nichtgebrauchsstellung (N) ausgestaltet ist, und dass der Kupplungsarm (12k) in der Nichtgebrauchsstellung (N) in einer gegenüber der Arbeitsstellung (A) anderen Position, insbesondere quer zu einer Fahrzeuglängsachse (68) des Zugfahrzeugs (16), in der Steckaufnahme (90) aufgenommen ist.

9. Anhängekupplung nach Anspruch 8, **dadurch gekennzeichnet, dass** der Zugbetriebshalter (11k) erste, der Arbeitsstellung (A) zugeordnete Verriegelungsmittel (92a), insbesondere erste Formschlusskonturen (93a), und zweite, der Nichtgebrauchsstellung (N) zugeordnete Verriegelungsmittel (92b), insbesondere Formschlusskonturen (93b; 93b'), aufweist.

10. Anhängekupplung nach einem der vorhergehenden Ansprüche, **dadurch gekennzeichnet, dass** die Mitnahmehalterung (31a-31k) einen Schutzbehälter (34), insbesondere eine Schutzhaube, für den Kupplungsarm (12; 12b-12e; 12h; 12i; 12k) umfasst oder bildet.

11. Anhängekupplung nach einem der vorhergehenden Ansprüche, **dadurch gekennzeichnet, dass** die Mitnahmehalterung (31a-31k) Rastmittel (38; 44) aufweist, mit denen der Kupplungsarm (12; 12b-12e; 12h; 12i; 12k) an der Mitnahmehalterung (31a-31k) verrastet werden kann.

12. Anhängekupplung nach Anspruch 11, **dadurch gekennzeichnet, dass** die Rastmittel (38; 44) an einem Gehäuse (33) der Mitnahmehalterung (31a-31k) ausgebildet sind, und dass das Gehäuse (33) im Bereich der Rastmittel (38; 44) federelastisch ist.

13. Anhängekupplung nach einem der vorhergehenden Ansprüche, **dadurch gekennzeichnet, dass** die Mitnahmehalterung (31a-31k) eine Kugelkopf-Aufnahme (36) für den Kugelkopf (13) aufweist.

14. Anhängekupplung nach einem der vorhergehenden Ansprüche, **dadurch gekennzeichnet, dass** die Mitnahmehalterung (31a-31k) eine Halteanordnung (40) zum Halten von Kupplungsarmen (12; 12b-12e; 12h; 12i; 12k) mit unterschiedlicher Geometrie aufweist.

15. Anhängekupplung nach Anspruch 14, **dadurch gekennzeichnet, dass** die Halteanordnung (40) mindestens einen langgestreckten Haltevorsprung (41) und/oder eine langgestreckte Halteaufnahme umfasst.

16. Anhängekupplung nach einem der vorhergehenden Ansprüche, **dadurch gekennzeichnet, dass** die Mitnahmehalterung (31d) zwischen einer Entnahmeposition (E), in der der Kupplungsarm (12; 12b-12e; 12h; 12i; 12k) aus der Mitnahmehalterung (31d) entnommen werden kann, und einer für den Fahrbetrieb vorgesehenen Fahrposition (F) beweglich gelagert ist.

17. Anhängekupplung nach Anspruch 16, **dadurch gekennzeichnet, dass** die Mitnahmehalterung (31d) in der Entnahmeposition (E) nach unten und/oder vor das Zugfahrzeug (16) verlagert ist.

18. Anhängekupplung nach Anspruch 16 oder 17 **dadurch gekennzeichnet, dass** sie eine Halteeinrichtung (51) zum Halten der Mitnahmehalterung (31d) in der Fahrposition (F) aufweist.

19. Anhängekupplung nach Anspruch 19, **dadurch gekennzeichnet, dass** die Halteeinrichtung (51) den Kupplungsarm (12; 12b-12e; 12h; 12i; 12k) in einer die Mitnahmehalterung (31d) in der Fahrposition (F) haltenden Haltestellung in der Mitnahmehalterung (31d) hält.

20. Anhängekupplung nach Anspruch 18 oder 19, **dadurch gekennzeichnet, dass** eine Schwenkachse (85) und/oder eine Längsverstellachse der Mitnahmehalterung (31d) und eine Schwenkachse (86) der Halteeinrichtung (51) winkelig, insbesondere rechtwinkelig, zueinander sind.

21. Anhängekupplung nach Anspruch 20, **dadurch gekennzeichnet, dass** die Halteeinrichtung (51) einen Schwenkbügel (52) aufweist.

22. Anhängekupplung nach einem der Ansprüche 18 bis 21, **dadurch gekennzeichnet, dass** ein vorderer Endbereich (59) der Halteeinrichtung (51) in der Haltestellung den Kupplungsarm (12; 12b-12e; 12h; 12i; 12k) untergreift oder gabelartig umgreift.

23. Anhängekupplung nach einem der Ansprüche 18 bis 22, **dadurch gekennzeichnet, dass** die Halteeinrichtung (51) eine Rasteinrichtung (87) für eine Rastverbindung mit der Mitnahmehalterung (31d) und/oder dem Kupplungsarm (12; 12b-12e; 12h; 12i; 12k) aufweist.

24. Anhängekupplung nach einem der Ansprüche 18 bis 23, **dadurch gekennzeichnet, dass** ein vorderes Ende der Halteeinrichtung (51) als ein Federende ausgestaltet ist, das in der Haltestellung unter Federspannung an der Mitnahmehalterung (31d) und/oder dem Kupplungsarm (12; 12b-12e; 12h; 12i; 12k) anliegt.

25. Anhängekupplung nach einem der vorhergehenden Ansprüche, **dadurch gekennzeichnet, dass** an der Mitnahmehalterung (31a-31k) eine Steckdosen-Halterung (62) für eine Steckdose (63) zur elektrischen Stromversorgung des Anhängers (14) angeordnet ist oder die Mitnahmehalterung (31a-31k) eine Steckdosen-Halterung bildet.

26. Anhängekupplung nach einem der vorhergehenden Ansprüche, **dadurch gekennzeichnet, dass** an der Mitnahmehalterung (31a-31k) ein Deckel (88) zum Verschließen des Zugbetriebshalters (11; 11k) angeordnet ist.

## Claims

1. Trailer coupling with a towing operation support (11; 11k) attachable to a towing vehicle (16), a coupling arm (12; 12b-12e; 12h; 12i; 12k) with a tow ball (13) lockable to the towing operation support (11; 11k) by a locking device (21) at least in an operating position (A) provided for pulling a trailer (14) and which when not in use may be removed from the towing operation support (11; 11k) in a release position of the locking device (21), wherein it has a driving support (31a-31k) for holding the coupling arm (12; 12b-12e; 12h; 12i; 12k) in an inoperative position (N) and which is attachable externally and releasably in the rear section of the towing vehicle (16) at least partly concealed from view, and wherein the towing operation support (11; 11k) has a towing operation locating sleeve (69), wherein the driving support (31a-31k) includes a driving location sleeve in the manner of the towing operation locating sleeve (69) and separate from the towing operation support (11; 11k), and wherein the driving support (31a-31k) has locking means (75) which interact with components of the locking device (21) on the coupling arm (12; 12b-12e; 12h; 12i; 12k), in particular in a similar manner to towing operation support locking means (76) of the towing operation support (11; 11k), **characterised in that** the components of the locking device (21) of the coupling arm (12; 12b-12e; 12h; 12i; 12k) include locking members mounted movably on the coupling arm (12; 12b-12e; 12h; 12i; 12k).

2. Trailer coupling according to claim 1, **characterised in that** the coupling arm (12; 12b-12e; 12h; 12i; 12k) in the inoperative position (N) is further removed from a road surface (64) than in the operating position (A) when the trailer coupling (10a-10k) is fitted to the towing vehicle (16).

3. Trailer coupling according to claim 1 or 2, **characterised in that** the coupling arm (12; 12b-12e; 12h; 12i; 12k) in its inoperative position (N) stands an angle to a vehicle vertical axis (66) of the towing vehicle (16), when the trailer coupling (10a-10k) is fitted to the towing vehicle (16).

4. Trailer coupling according to any of the preceding claims, **characterised in that** the coupling arm (12; 12b-12e; 12h; 12i; 12k) in its inoperative position (N) extends transversely, in particular roughly at right-angles to a vehicle longitudinal axis (68) of the towing vehicle (16), when the trailer coupling (10a-10k) is fitted to the towing vehicle (16).

5. Trailer coupling according to any of the preceding claims, **characterised in that** the coupling arm (12; 12b-12e; 12h; 12i; 12k) in its inoperative position (N) is located in a neutral area (32) between a support assembly (15) and the bumper (19) or between the support assembly (15) and the body (20) of the towing vehicle (16), when the trailer coupling (10a-10k) is fitted to the towing vehicle (16).

6. Trailer coupling according to claim 5, **characterised in that** the towing operation support (11; 11k) and the driving support (31a-31k) are provided on the support assembly (15), in particular on a cross-member (18) provided between the body (20) of the towing vehicle (16) and a bumper (19) of the towing vehicle (16), when the trailer coupling (10a-10k) is fitted to the towing vehicle (16).

7. Trailer coupling according to claim 1, **characterised in that** the locking means (75) have interlocking contours (77) in which the interlocking contours of the locking device (21) on the coupling arm (12; 12b-12e; 12h; 12i; 12k) engage.

8. Trailer coupling according to any of the preceding claims, **characterised in that** the towing operation support (11k) forms the driving support (31k), that the towing operation support (11k) is in the form of a plug-in receptacle (90) to accommodate the coupling arm (12k) in the operating position (A) and for a function of the towing operation support (11k) as driving support (31k) in the inoperative position (N), and that the coupling arm (12k) in the inoperative position (N) is accommodated in the plug-in receptacle (90), in a different position from the operating position (A), in particular at right-angles to to a vehicle longitudinal axis (68) of the towing vehicle (16).

9. Trailer coupling according to claim 8, **characterised in that** the towing operation support (11k) has first locking means (92a), in particular first interlocking contours (93a), assigned to the operating position (A), and second locking means (92b), in particular second interlocking contours (93b; 93b'), assigned to the inoperative position (N).

10. Trailer coupling according to any of the preceding claims, **characterised in that** the driving support (31a-31k) includes or forms a protective receptacle (34), in particular a protective hood, for the coupling arm (12; 12b-12e; 12h; 12i; 12k).

11. Trailer coupling according to any of the preceding claims, **characterised in that** the driving support (31a-31k) has latching means (3 8; 44) by which the coupling arm (12; 12b-12e; 12h; 12i; 12k) may be engaged with the driving support (31a-31k).

12. Trailer coupling according to claim 11, **characterised in that** the latching means (38; 44) are formed on a housing (33) of the driving support (31a-31k), and that the housing (33) is spring-elastic in the area of the latching means (38; 44).

13. Trailer coupling according to any of the preceding claims, **characterised in that** the driving support (31a-31k) has a tow ball receptacle (36) for the tow ball (13).

14. Trailer coupling according to any of the preceding claims, **characterised in that** the driving support (31a-31k) has a holding arrangement (40) for the holding of coupling arms (12; 12b-12e; 12h; 12i; 12k) of different geometry.

15. Trailer coupling according to claim 14, **characterised in that** the holding arrangement (40) comprises at least one elongated retaining projection (41) and/or an elongated retaining socket.

16. Trailer coupling according to any of the preceding claims, **characterised in that** the driving support (31d) is movably mounted between a removal position (E) in which the coupling arm (12; 12b-12e; 12h; 12i; 12k) may be removed from the driving support (31d), and a running position (F) provided for vehicle operation.

17. Trailer coupling according to claim 16, **characterised in that** the driving support (31d) in the removal position (E) may be shifted downwards and/or in front of the towing vehicle (16).

18. Trailer coupling according to claim 16 or 17, **characterised in that** it has a holding fixture (51) for holding the driving support (31d) in the running position (F).

19. Trailer coupling according to claim 19, **characterised in that** the holding fixture (51) holds the coupling arm (12; 12b-12e; 12h; 12i; 12k) in the driving support (31d) in a holding position which holds the driving support (31d) in the running position (F).

20. Trailer coupling according to claim 18 or 19, **characterised in that** a pivot axis (85) and/or a longitudinal adjustment axis of the driving support (31d), and a pivot axis (86) of the holding fixture (51) are at an angle, in particular a right-angle, to one another.

21. Trailer coupling according to claim 20, **characterised in that** the holding fixture (51) has a swivel bracket (52).

22. Trailer coupling according to any of claims 18 to 21 **characterised in that**, in the holding position, a front end section (59) of the holding fixture (51) engages beneath the coupling arm (12; 12b-12e; 12h; 12i; 12k) or encompasses it like a fork.

23. Trailer coupling according to any of claims 18 to 22, **characterised in that** the holding fixture (51) has a latching mechanism (87) for a latch connection with the driving support (31d) and/or the coupling arm (12; 12b-12e; 12h; 12i; 12k).

24. Trailer coupling according to any of claims 18 to 23, **characterised in that** a front end of the holding fixture (51) is designed as a sprung end which, in the holding position, fits tightly under spring tension against the driving support (31d) and/or the coupling arm (12; 12b-12e; 12h; 12i; 12k).

25. Trailer coupling according to any of the preceding claims, **characterised in that** a first socket holder (62) for a socket (63) for the electrical power supply to the trailer (14) is provided on the driving support (31a-31k), or the driving support (31a-31k) forms a socket holder (63).

26. Trailer coupling according to any of the preceding claims, **characterised in that** a cover (88) for sealing the towing operation support (11; 11k) is provided on the driving support (31a-31k).

## Revendications

1. Attelage de remorque avec un support d'exploitation (11 ; 11k) pouvant être fixé sur un véhicule tracteur (16), un bras d'attelage (12 ; 12b-12e ; 12h ; 12i ; 12k) présentant une tête sphérique (13), pouvant être verrouillé sur le support d'exploitation (11 ; 11 k) avec un dispositif de verrouillage (21) au moins dans une position de travail (A) prévue pour la traction d'une remorque (14), qui peut être retiré du support d'exploitation (11 ; 11k) en cas de non utilisation dans une position de libération du dispositif de verrouillage (21), celui-ci présentant un support d'entraînement (31a-31k) pouvant être fixé de manière amovible tout en étant caché au moins en partie à l'extérieur dans la zone arrière du véhicule tracteur (16) pour le maintien du bras d'attelage (12 ; 12b-12e ; 12h ; 12i ; 12k) dans une position de non utilisation (N) et le support d'exploitation (11 ; 11 k) présentant une douille de réception d'exploitation (69), le support d'entraînement (31a-31k) comportant une douille de réception d'entraînement séparée du support d'exploitation (11 ; 11 k) à la manière de la douille de réception d'exploitation (69) et le support d'entraînement (31a-31k) présentant des moyens de verrouillage (75) qui coopèrent avec des composants du dispositif de verrouillage (21) sur le bras d'attelage (12 ; 12b-12e; 12h ; 12i ; 12k), en particulier à la manière des moyens de verrouillage (76) du support d'exploitation (11 ; 11k), **caractérisé en ce que** les composants du dispositif de verrouillage (21) du bras d'attelage (12 ; 12b-12e; 12h ; 12i ; 12k) comprennent des corps de verrouillage logés de manière mobile sur le bras d'attelage (12 ; 12b-12e ; 12h ; 12i ; 12k).

2. Attelage de remorque selon la revendication 1, **caractérisé en ce que** le bras d'attelage (12 ; 12b-12e; 12h ; 12i ; 12k) est davantage éloigné en position de non utilisation (N) d'une surface de chaussée (64) qu'en position de travail (A) lorsque l'attelage de remorque (10a-10k) est monté sur le véhicule tracteur (16).

3. Attelage de remorque selon la revendication 1 ou 2, **caractérisé en ce que** le bras d'attelage (12 ; 12b-12e ; 12h ; 12i ; 12k) se trouve en biais dans sa position de non utilisation (N) par rapport à un axe vertical (66) du véhicule tracteur (16) lorsque l'attelage de remorque (10a-10k) est monté sur le véhicule tracteur (16).

4. Attelage de remorque selon l'une quelconque des revendications précédentes, **caractérisé en ce que** le bras d'attelage (12 ; 12b-12e ; 12h ; 12i ; 12k) s'étend dans sa position de non utilisation (N) transversalement, en particulier à peu près à angle droit par rapport à un axe longitudinal (68) du véhicule tracteur (16) lorsque l'attelage de remorque (10a-10k) est monté sur le véhicule tracteur (16).

5. Attelage de remorque selon l'une quelconque des revendications précédentes, **caractérisé en ce que** le bras d'attelage (12 ; 12b-12e ; 12h ; 12i ; 12k) est disposé dans la position de non utilisation (N) dans un espace de repos (32) entre un ensemble porteur (15) et le pare-chocs (19) ou entre l'ensemble porteur (15) et une carrosserie (20) du véhicule tracteur (16) lorsque l'attelage de remorque (10a-10k) est monté sur le véhicule tracteur (16).

6. Attelage de remorque selon la revendication 5, **caractérisé en ce que** le support d'exploitation (11 ; 11k) et le support d'entraînement (31a-31k) sont disposés sur l'ensemble porteur (15) en particulier sur une traverse (18) disposée entre une carrosserie (20) du véhicule tracteur (16) et un pare-chocs (19) du véhicule tracteur (16) lorsque l'attelage de remorque (10a-10k) est monté sur le véhicule tracteur (16).

7. Attelage de remorque selon la revendication 1, **caractérisé en ce que** les moyens de verrouillage (75) présentent des contours positifs (77), dans lesquels s'engagent des contours positifs du dispositif de verrouillage (21) sur le bras d'attelage (12 ; 12b-12e ; 12h ; 12i ; 12k).

8. Attelage de remorque selon l'une quelconque des revendications précédentes, **caractérisé en ce que** le support d'exploitation (11k) forme le support d'entraînement (31k), **en ce que** le support d'exploitation (11k) est configuré comme un logement enfichable (90) pour le logement du bras d'attelage (12k) dans la position de travail (A) et pour une fonction du support d'exploitation (11k) comme support d'entraînement (31k) dans la position de non utilisation (N) et **en ce que** le bras d'attelage (12k) dans la position de non utilisation (N) est reçu dans une autre position par rapport à la position de travail (A), en particulier transversalement à un axe longitudinal (68) du véhicule tracteur (16) dans le logement enfichable (90).

9. Attelage de remorque selon la revendication 8, **caractérisé en ce que** le support d'exploitation (11k) présente des premiers moyens de verrouillage (92a) associés à la position de travail (A), en particulier des premiers contours positifs (93a) et des seconds moyens de verrouillage (92b) associés à la position de non utilisation (N), en particulier des contours positifs (93b ; 93b').

10. Attelage de remorque selon l'une quelconque des revendications précédentes, **caractérisé en ce que** le support d'entraînement (31a-31k) comporte ou forme une enceinte de protection (34), en particulier un capot de protection pour le bras d'attelage (12 ; 12b-12e ; 12h ; 12i ; 12k).

11. Attelage de remorque selon l'une quelconque des revendications précédentes, **caractérisé en ce que** le support d'entraînement (31a-31k) présente des moyens d'encliquetage (38 ; 44), avec lesquels le bras d'attelage (12 ; 12b-12e ; 12h ; 12i ; 12k) peut être encliqueté sur le support d'entraînement (31 a-31 k).

12. Attelage de remorque selon la revendication 11, **caractérisé en ce que** les moyens d'encliquetage (38 ; 44) sont réalisés sur un boîtier (33) du support d'entraînement (31a-31k) et **en ce que** le boîtier (33) est élastique dans la zone des moyens d'encliquetage (38 ; 44).

13. Attelage de remorque selon l'une quelconque des revendications précédentes, **caractérisé en ce que** le support d'entraînement (31a-31k) présente un logement (36) pour la tête sphérique (13).

14. Attelage de remorque selon l'une quelconque des revendications précédentes, **caractérisé en ce que** le support d'entraînement (31a-31k) présente un ensemble de retenue (40) pour maintenir des bras d'attelage (12 ; 12b-12e ; 12h ; 12i ; 12k) avec une géométrie différente.

15. Attelage de remorque selon la revendication 14, **caractérisé en ce que** l'ensemble de retenue (40) comporte au moins une saillie de retenue (41) étirée en longueur et/ou un logement de retenue étiré en longueur.

16. Attelage de remorque selon l'une quelconque des revendications précédentes, **caractérisé en ce que** le support d'entraînement (31 d) est logé de manière mobile entre une position de retrait (E), dans laquelle le bras d'attelage (12 ; 12b-12e; 12h ; 12i ; 12k) peut être retiré du support d'entraînement (31 d) et une position de marche (F) prévue pour le mode de marche.

17. Attelage de remorque selon la revendication 16, **caractérisé en ce que** le support d'entraînement (31d) dans la position de retrait (E) est déplacé vers le bas et/ou devant le véhicule tracteur (16).

18. Attelage de remorque selon la revendication 16 ou 17, **caractérisé en ce qu'**il présente un dispositif de retenue (51) pour maintenir le support d'entraînement (31d) dans la position de marche (F).

19. Attelage de remorque selon la revendication 19, **caractérisé en ce que** le dispositif de retenue (51) maintient le bras d'attelage (12 ; 12b-12e ; 12h ; 12i ; 12k) dans une position de retenue maintenant le support d'entraînement (31d) dans la position de marche (F) dans le support d'entraînement (31d).

20. Attelage de remorque selon la revendication 18 ou 19, **caractérisé en ce qu'**un axe de pivotement (85) et/ou un axe de réglage longitudinal du support d'entraînement (31d) et un axe de pivotement (86) du dispositif de retenue (51) sont angulaires, en particulier à angle droit les uns par rapport aux autres.

21. Attelage de remorque selon la revendication 20, **caractérisé en ce que** le dispositif de retenue (51) présente un étrier de pivotement (52).

22. Attelage de remorque selon l'une quelconque des revendications 18 à 21, **caractérisé en ce qu'**une zone d'extrémité avant (59) du dispositif de retenue (51) dans la position de retenue vient en prise sous le bras d'attelage (12 ; 12b-12e ; 12h ; 12i ; 12k) ou l'entoure comme une fourche.

23. Attelage de remorque selon l'une quelconque des revendications 18 à 22, **caractérisé en ce que** le dispositif de retenue (51) présente un dispositif d'encliquetage (87) pour une liaison par encliquetage avec le support d'entraînement (31d) et/ou le bras d'attelage (12 ; 12b-12e; 12h ; 12i ; 12k).

24. Attelage de remorque selon l'une quelconque des revendications 18 à 23, **caractérisé en ce qu'**une extrémité avant du dispositif de retenue (51) est configurée comme une extrémité de ressort qui repose dans la position de retenue sous tension de ressort sur le support d'entraînement (31d) et/ou le bras d'attelage (12 ; 12b-12e ; 12h ; 12i ; 12k).

25. Attelage de remorque selon l'une quelconque des revendications précédentes, **caractérisé en ce que** sur le support d'entraînement (31 a-31 k) est disposé un support (62) pour une prise de courant (63) destinée à l'alimentation électrique de la remorque (14) ou le support d'entraînement (31 a-31 k) forme un support de prise.

26. Attelage de remorque selon l'une quelconque des revendications précédentes, **caractérisé en ce qu'**un couvercle (88) est disposé sur le support d'entraînement (31a-31k) pour la fermeture du support d'exploitation (11 ; 11k).
